(19) Europäisches Patentamt
European Patent Office
Office européen des brevets

(11) Veröffentlichungsnummer: **0 445 619 B1**

(12) # EUROPÄISCHE PATENTSCHRIFT

(45) Veröffentlichungstag der Patentschrift: **09.11.94**

(51) Int. Cl.$^{5}$: **C08F 2/10**

(21) Anmeldenummer: **91102741.5**

(22) Anmeldetag: **25.02.91**

(54) **Verfahren zur Herstellung von feinteiligen, wasserlöslichen Polymerisaten.**

(30) Priorität: **08.03.90 DE 4007313**

(43) Veröffentlichungstag der Anmeldung:
**11.09.91 Patentblatt 91/37**

(45) Bekanntmachung des Hinweises auf die Patenterteilung:
**09.11.94 Patentblatt 94/45**

(84) Benannte Vertragsstaaten:
**BE DE FR GB IT NL SE**

(56) Entgegenhaltungen:
**EP-A- 0 376 118**
**US-A- 4 286 082**

(73) Patentinhaber: **BASF Aktiengesellschaft**
**Carl-Bosch-Strasse 38**
**D-67063 Ludwigshafen (DE)**

(72) Erfinder: **Niessner, Manfred, Dr.**
**Gotenstrasse 25**
**W-6707 Schifferstadt (DE)**
Erfinder: **Wickel, Stefan, Dr.**
**Giselherstrasse 71**
**W-6700 Ludwigshafen (DE)**
Erfinder: **Schneider, Walter**
**Edenkobener Strasse 11**
**W-6700 Ludwigshafen (DE)**
Erfinder: **Beck, Juergen**
**Konrad-Adenauer-Allee 116 a**
**W-6806 Viernheim (DE)**
Erfinder: **Hartmann, Heinrich, Dr.**
**Weinheimer Strasse 46**
**W-6703 Limburgerhof (DE)**
Erfinder: **Meyer, Thomas**
**Ruthenstrasse 5**
**W-6737 Boehl-Iggelheim (DE)**

**EP 0 445 619 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Feinteilige, wasserlösliche Polymerisate sind beispielsweise nach dem Verfahren der umgekehrten Suspensionspolymerisation von wasserlöslichen Monomeren in Kohlenwasserstoffen herstellbar. Für dieses Verfahren benötigt man spezielle Schutzkolloide. Die dabei anfallenden perlförmigen Polymerisate werden von der Kohlenwasserstoffphase getrennt und müssen anschließend von anhaftenden Kohlenwasserstoffen befreit werden. Derartige Verfahren werden beispielsweise in der US-A-2 982 749 und in der US-A-4 879 361 beschrieben.

Besonders feinteilige, wasserlösliche Polymerisate können beispielsweise aus Wasser-in-Öl-Polymeremulsionen durch Ausfällen und Isolieren der Polymerisate gewonnen werden, vgl. US-A-3 284 393. Relativ grobteilige, wasserlösliche Polymerisate sind beispielsweise durch Gelpolymerisation von wasserlöslichen Monomeren auf einem Band- oder in einem Kolbenreaktor erhältlich. Die dabei jeweils entstehenden Polymergele müssen in relativ aufwendigen Verfahrensschritten zerkleinert werden.

Aus der US-A-4 286 082 ist ein Verfahren zur Herstellung von vernetzten, wasserabsorbierenden Polymerisaten bekannt, bei dem man Alkalimetallacrylate oder Mischungen aus Alkalimetallacrylaten und Acrylsäure zusammen mit einem vernetzend wirkenden Monomer, das 2 bis 4 ethylenisch ungesättigte Doppelbindungen im Molekül enthält, in Gegenwart von oberflächenaktiven Stoffen in mindestens 25 gew.%iger wäßriger Lösung polymerisiert und das dabei entstehende gelförmige Polymer in der Wärme trocknet. Das oberflächenaktive Mittel hat dabei die Aufgabe, die Copolymerisation der wasserlöslichen Monomeren mit den Vernetzern zu verbessern. Es befindet sich nach Abschluß der Polymerisation auf der Oberfläche und im Innern der Gelteilchen. Das Tensid muß vor der Polymerisation zum Reaktionsgemisch zugegeben werden. Ein Zusatz des oberflächenaktiven Stoffs nach Abschluß der Polymerisation wirkt sich nach den Angaben in der Patentschrift negativ auf die Qualität des Produkts aus.

Aus der GB-A-2 146 343 ist ein Verfahren zur kontinuierlichen Herstellung von wasserabsorbierenden vernetzten Polymerisaten in einem zweiwelligen Kneter bekannt, bei dem man wäßrige Lösungen von gegebenenfalls partiell neutralisierten ethylenisch ungesättigten Carbonsäuren zusammen mit einem Vernetzer in Gegenwart von üblichen Polymerisationsinitiatoren copolymerisiert. Man erhält dabei Polymerteilchen, deren Durchmesser im allgemeinen 3 cm nicht überschreitet und üblicherweise in dem Bereich von 0,05 bis 1 cm liegt. Da die Partikelgröße einen direkten Einfluß auf die Diffusion des Wasser während des Trocknungsvorgangs hat, müssen größere Gelteilchen längere Zeit getrocknet werden als kleinere.

Aus der US-A-4 769 427 ist ein Verfahren zur Herstellung von vernetzten feinteiligen, gelförmigen Polymerisaten in einwelligen Mischern mit hohem Selbstreinigungsgrad bekannt. Man unterwirft Monomermischungen, die pro 100 Gew.-Telle einer zu jeweils 50 bis 100 Mol% neutralisierten Acrylsäure oder Methacrylsäure, Acrylamid, Methacrylamid oder N-Vinylpyrrolidon sowie 0,01 bis 5 Gew.-Teile eines Vernetzers enthalten, in 20 bis 65 gew.%iger wäßriger Lösung in Gegenwart von Initiatoren der Polymerisation bei Temperaturen in dem Bereich von 45 bis 95 °C und entfernt während der Polymerisation unter vermindertem Druck einen Teil des Wassers aus der Reaktionsmischung, so daß ein krümmeliges Gel mit einem Feststoffgehalt von 30 bis 70 Gew.% ausgetragen wird.

Ein ähnliches Verfahren ist aus der EP-A-0 238 050 bekannt, bei dem die Copolymerisation z.B. von gegebenenfalls mit Alkalimetallbasen neutralisierter Acrylsäure oder Methacrylsäure und einem Vernetzer mehrstufig in einer diskontinuierlich arbeitenden Mischvorrichtung unter ständiger Durchmischung in allen Stufen durchgeführt wird, wobei man in der ersten Stufe der Polymerisation die wäßrige Monomerlösung bei Temperaturen von 45 bis 95 °C und einem Druck von 10 000 bis 80 000 Pa (0,1 bis 0,8 bar) unter partiellem Abdestillieren von Wasser copolymerisiert, in der zweiten Stufe die Copolymerisation bei Temperaturen von 100 bis 170 °C unter einem Druck bis zu 8 bar vervollständigt und nach dem Entspannen in der dritten Stufe dann den Wassergehalt des so hergestellten feinteiligen, vernetzten Copolymerisats auf Werte von 0,5 bis 10 Gew.% erniedrigt. Bei den beiden zuletzt genannten Verfahren wird ein krümmeliges Polymergel gebildet, das jeweils im Polymerisationsreaktor nur teilweise getrocknet werden kann. Während der Nachpolymerisation und während der Trocknung wird das Polymergel mehr oder weniger stark geschert, so daß es zu einer an sich ungewünschten Veränderung in der Gelstruktur kommt.

Aus der EP-A-0 289 338 ist die Herstellung von hydrophilen Polymerisaten mit einem geringen Restmonomergehalt bekannt, bei dem man wasserlösliche Monomere in einem zweiwelligen Kneter, vorzugsweise in Gegenwart von Vernetzern, polymerisiert und das dabei entstehende feinteilige Polymer mit einem Wasserdampf enthaltenden Gas bei Temperaturen in dem Bereich von 80 bis 250 °C trocknet.

Der Erfindung liegt die Aufgabe zugrunde, gegenüber dem Stand der Technik ein verbessertes Verfahren zur Herstellung von feinteiligen, wasserlöslichen Polymerisaten zur Verfügung zu stellen.

Die Aufgabe wird erfindungsgemäß gelöst mit einem Verfahren zur Herstellung von feinteiligen, wasserlöslichen Polymerisaten durch Polymerisieren von wasserlöslichen, monoethylenisch ungesättigten Monomeren in mindestens 20 gew.-%iger wäßriger Lösung in Gegenwart von Radikale bildenden Initiatoren in einem Kneter unter Bildung feinteiliger, wasserlöslicher Polymergele, wenn man bei der Polymerisation 0,1 bis 10 Gew.-% an Tensiden, bezogen auf die gesamten Monomeren, einsetzt, wobei man zunächst bis zu einem Umsatz der Monomeren von mindestens 60 % in Abwesenheit von Tensiden oder in Gegenwart von bis zu 50 % der Tensidmenge polymerisiert und danach die restliche Tensidmenge zum Reaktionsgemisch zufügt und die Polymerisation zu Ende führt.

Wasserlösliche monoethylenisch ungesättigte Monomere der Gruppe (a) sind beispielsweise ethylenisch ungesättigte $C_3$- bis $C_6$-Carbonsäuren, deren Amide und Ester mit Aminoalkoholen der Formel

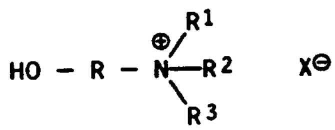
(I),

in der R = $C_2$- bis $C_5$-Alkylen, $R^1$, $R^2$, $R^3$ = H, $CH_3$, $C_2H_5$, $C_3H_7$ bedeutet. Bei diesen Verbindungen handelt es sich beispielsweise um Acrylsäure, Methacrylsäure, Crotonsäure, Itaconsäure, Maleinsäure, Fumarsäure, Acrylamid, Methacrylamid, Crotonsäureamid, Dimethylaminoethylacrylat, Diethylaminoethylacrylat,Dimethylaminopropylacrylat, Dimethylaminobutylacrylat, Diethylaminoethylmethacrylat, Dimethylaminoethylmethacrylat, Dimethylaminopropylacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion $X^{\ominus}$ für die Verbindungen der Formel I ist der Säurerest der Mineralsäuren bzw. der Carbonsäuren oder Methosulfat, Ethosulfat oder Halogenid aus einem Quaternierungsmittel.

Außerdem eignen sich Alkylamide der Formel

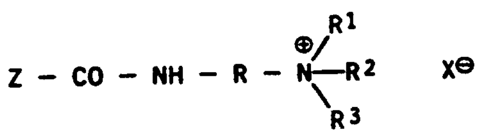
(II),

in der R = $C_2$- bis $C_5$-Alkylen, $R^1$, $R^2$, $R^3$ = H, $CH_3$, $C_2H_5$, $C_3H_7$, Z-CO = Acylrest ethylenisch ungesättigter $C_3$- bis $C_6$-Carbonsäuren und $X^{\ominus}$ die in Formel I angegebene Bedeutung hat. Beispiele für Verbindungen der Formel II sind Dimethylaminopropylacrylamide und Dimethylaminopropylmethacrylamid. Die basischen Alkylaminoacrylamide werden in Form ihrer Salze mit starken Mineralsäuren, Sulfonsäuren oder Carbonsäuren oder in quaternisierter Form eingesetzt.

Weitere wasserlösliche Monomere der Gruppe (a) sind beispielsweise Hydroxyethylacrylat, Hydroxypropylacrylat, Hydroxyethylmethacrylat, Hydroxypropylmethacrylat und/oder Acrylnitril, N-Vinylpyrrolidon, Acrylamidopropansulfonsäure, Vinylphosphonsäure und/oder Alkali- bzw. Ammoniumsalze der Vinylsulfonsäure und N-Vinylamide, wie N-Vinylformamid, N-Vinyl-N-methylformamid, N-Vinylacetamid, N-Vinyl-N-methylacetamid oder deren Mischungen. Die Säuregruppen enthaltenden Monomeren können ebenfalls entweder in nicht neutralisierter Form oder in partiell bzw. bis zu 100 % neutralisierter Form bei der Polymerisation eingesetzt werden.

Als wasserlösliche Monomere der Gruppe (a) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden. Bevorzugte Monomere der Gruppe (a) sind Acrylsäure, Methacrylsäure, Acrylamid und/oder Methacrylamid. Diese Monomeren können in jedem beliebigen Verhältnis miteinander copolymerisiert werden. Beispielsweise können Copolymerisate aus 95 Gew.-% Acrylsäure und 5 Gew.-% Acrylamid oder Copolymerisate aus 95 Gew.-% Acrylamid und 5 Gew.-% Acrylsäure hergestellt werden. Die ethylenisch ungesättigten Carbonsäuren können in Form der freien Säuren oder in vollständig oder nur teilweise (z.B. 5 - 95 %) neutralisierter Form polymerisiert werden. Zur Neutralisation verwendet man vorzugsweise Natronlauge, Kalilauge, Ammoniak oder Amine. Bevorzugt eingesetzte Monomere zur Herstellung von Homo- und Copolymerisaten sind außerdem die obengenannten Acrylsäure- und Methacrylsäureester von Aminoalkoholen, z.B. Dimethylaminoethylacrylat oder Dimethylaminoethylmethacrylat, sowie (Meth)Acrylsäureaminoalkylamide, die jeweils als Salze starker Säuren oder in quaternisierter Form polymerisiert werden.

Die Polymerisation der wasserlöslichen Monomeren der Gruppen (a) kann - sofern eine Änderung der Eigenschaften der Polymerisate gewünscht wird - zusätzlich noch in Gegenwart von wasserunlöslichen Monomeren der Gruppe (b) durchgeführt werden. Im vorliegenden Zusammenhang werden die Monomeren als wasserunlöslich bezeichnet, wenn sie sich zu weniger als 1 Gew.-% in Wasser bei 20°C lösen, anderenfalls, d.h. sofern sich die Monomeren zu mindestens 1 Gew.-% in Wasser einer Temperatur von 20°C lösen, als wasserlöslich. Als Monomere der Gruppe (b) kommen beispielsweise Methacrylnitril sowie Ester der Acrylsäure oder Methacrylsäure mit einwertigen, 1 bis 18 Kohlenstoffatome enthaltenden Alkoholen in Betracht, z.B. Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleinsäuredibutylester, Vinylacetat und Vinylpropionat. Sofern die Monomeren der Gruppe (b) zur Modifizierung der wasserlöslichen Polymerisate verwendet werden, setzt man 0,5 bis 20, vorzugsweise 2 bis 10 Mol-%, bezogen auf die Monomeren (a) ein.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, z.B. 2-Mercaptoethanol, Mercaptopropanol und Mercaptobutanol, Dodecylmercaptan, Ameisensäure, Aldehyde, Ammoniak und Amine, z.B. Ethanolamin, Diethanolamin, Triethanolamin, Triethylamin, Morpholin und Piperidin.

Die Monomeren (a) und gegebenenfalls (b) werden in 20 bis 80, vorzugsweise 30 bis 60 gew.-%iger wäßriger Lösung in Gegenwart von Polymerisationsinitiatorenpolymerisiert. Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxidisulfat. Mischungen aus Wasserstoffperoxid und Natriumperoxidsulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butylper-2-ethylhexanoat, tert.-Butylperisononanoat, tert.-Butylpermaleat, tert.-Butylperbenzoat, tert.-Butylper-3,5,5-trimethylhexanoat und tert.-Amylperneodekanoat. Weitere geeignete Polymerisationsinitiatoren sind Azostarter, z.B. 2,2'-Azobis-(2-amidinopropan)dihydrochlorid, 2,2'-Azobis-(N,N'-dimethylen)-isobutyramidin-dihydrochlorid, 2-(Carbamoylazo)isobutyronitril und 4,4'-Azobis-(4-cyanovaleriansäure). Die genannten Polymerisationsinitiatoren werden in üblichen Mengen eingesetzt, z.B. in Mengen von 0,01 bis 5, vorzugsweise 0,1 bis 2 Mol%, bezogen auf die zu polymerisierenden Monomeren.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man vorzugsweise $3 \cdot 10^{-4}$ bis 1 Mol-% der reduzierenden Komponente des Redoxkatalysatorsystems und 0,01 bis 5 Mol-% der oxidierenden Komponente des Redoxkatalysators. Anstelle der oxidierenden Komponente des Redoxkatalysators kann man auch einen oder mehrere wasserlösliche Azostarter verwenden.

Zur Herstellung der feinteiligen, gelförmigen, wasserlöslichen Homo- und Copolymerisate benötigt man erfindungsgemäß Tenside. Geeignet sind hierfür alle Tenside, die einen HLB-Wert von mindestens 3 haben (zur Definition des HLB-Werts vgl. W.C. Griffin, J. Soc. Cosmetic Chem., Vol. 5, 249 (1954)). Geeignete nichtionische Tenside sind beispielsweise die Anlagerungsprodukte von Ethylenoxid, Propylenoxid oder Mischungen aus Ethylenoxid und Propylenoxid an Alkylphenole, aliphatische Alkohole, Carbonsäuren und Amine. Beispielsweise eignen sich mit Ethylenoxid und/oder Propylenoxid alkoxylierte $C_8$- bis $C_{12}$-Alkylphenole. Handelsübliche Produkte dieser Art sind beispielsweise Octylphenole bzw. Nonylphenole, die jeweils mit 4 bis 20 Mol Ethylenoxid pro Mol Phenol umgesetzt sind. Andere nichtionische Tenside sind ethoxylierte $C_{10}$- bis $C_{24}$-Fettalkohole oder ethoxylierte $C_{10}$- bis $C_{24}$-Fettsäuren sowie ethoxylierte $C_{10}$- bis $C_{24}$-Fettamine oder ethoxylierte $C_{10}$- bis $C_{24}$-Fettsäureamide. Außerdem eignen sich partiell mit $C_{10}$- bis $C_{24}$-Fettsäuren partiell veresterte mehrwertige $C_3$- bis $C_6$-Alkohole. Diese Ester können zusätzlich mit 2 bis

20 Mol Ethylenoxid umgesetzt sein. Als Fettalkohole, die zur Herstellung der Tenside alkoxyliert werden, eignen sich beispielsweise Palmitylalkohol, Stearylalkohol, Myristylalkohol, Laurylalkohol, Oxoalkohole sowie ungesättigte Alkohole, wie Oleylalkohol. Die Fettalkohole werden dabei zu einem solchen Grad ethoxyliert bzw. propoxyliert oder mit Ethylenoxid und Propylenoxid umgesetzt, daß die Reaktionsprodukte in Wasser löslich sind. Im allgemeinen setzt man 1 Mol der oben angegebenen Fettalkohole mit 2 bis 20 Mol Ethylenoxid und gegebenenfalls bis zu 5 Mol Propylenoxid so um, daß man Tenside erhält, die einen HLB-Wert von mehr als 8 haben.

$C_3$- bis $C_6$-Alkohole, die zur Herstellung der Tenside partiell verestert und gegebenenfalls ethoxyliert werden, sind beispielsweise Glycerin, Sorbit, Mannit und Pentaerythrit. Diese mehrwertigen Alkohole werden mit $C_{10}$- bis $C_{24}$-Fettsäuren z.B. Ölsäure, Stearinsäure oder Palmitinsäure partiell verestert. Die Veresterung mit den Fettsäuren erfolgt dabei höchstens bis zu einem solchen Grad, daß noch mindestens eine OH-Gruppe des mehrwertigen Alkohols unverestert bleibt. Geeignete Veresterungsprodukte sind beispielsweise Sorbitanmonooleat, Sorbitantristearat, Mannitmonooleat, Glycerinmonooleat und Glycerindioleat. Die genannten Fettsäureester mehrwertiger Alkohole, die noch mindestens eine freie OH-Gruppe enthalten, können zur Modifizierung noch mit Ethylenoxid, Propylenoxid oder Mischungen aus Ethylenoxid und Propylenoxid umgesetzt werden. Pro Mol Fettsäureester verwendet man vorzugsweise 2 bis 20 Mol der genannten Alkylenoxid. Der Ethoxylierungsgrad hat bekanntlich einen Einfluß auf den HLB-Wert der nichtionischen Tenside. Durch geeignete Wahl der Alkoxylierungsmittel und der Menge an Alkoxylierungsmittel kann man Tenside mit HLB-Werten in dem Bereich von 3 bis 20 in technisch einfacher Weise herstellen.

Eine weitere Gruppe geeigneter Substanzen sind Homopolymere des Ethylenoxids, Blockcopolymere von Ethylenoxid und Alkylenoxiden, vorzugsweise Propylenoxid sowie polyfunktionelle Blockcopolymere, die beispielsweise durch sequentielle Addition von Propylenoxid und Ethylenoxid an Diamine gebildet werden.

Die nichtionischen Tenside können entweder allein oder auch in Mischung miteinander verwendet werden. Hierbei ergeben sich zahlreiche Variationsmöglichkeiten, z.B. kann man Tenside eines verschiedenen Ethoxylierungsgrades oder auch alkoxylierte Phenole zusammen mit ethoxylierten Fettalkoholen oder ethoxylierten Fettalkoholderivaten einsetzen. Weitere geeignete Tenside sind $C_8$- bis $c_{24}$-Alkylsulfonate, die vorzugsweise in Form der Alkalisalze eingesetzt werden, $C_8$- bis $C_{24}$-Alkylsulfate, die vorzugsweise in Form der Alkali- oder Trialkanolammoniumsalze eingesetzt werden, Sulfonbernsteinsäurediester, z.B das Natriumsalz von Sulfobernsteinsäure-di-(2-ethylhexyl)ester, Sulfobernsteinsäurehalbester, wie beispielsweise das Dinatriumsalz der Rizinolsäure-monoethanolamidosulfobernsteinsäure oder Dinatriumfettalkoholpolyglykolethersulfosuccinat, $C_8$- bis $C_{24}$-Alkylarylsulfonsäuren, z.B. das Dinatriumsalz von Dodecyldiphenyletherdisulfonsäure sowie die Schwefelsäurehalbester von Anlagerungsprodukten von Ethylenoxid an Alkylphenole oder Fettalkohole. Geeignete kationische Tenside sind beispielsweise die Anlagerungsprodukte von Alkylenoxiden an Fettamine bzw. Salze von Fettaminen, wie z.B. Pentaoxethylstearylammoniumacetat oder ethoxyliertes Methyloleinamin-Methosulfat sowie langkettige Alkylbenzyldimethylammoniumverbindungen, wie $C_{10}$- bis $C_{22}$-Alkyl-benzyl-dimethylammoniumchlorid. Weitere geeignete kationische Tenside sind die Salze von Fettaminen, z.B. Kokosfettammoniumacetat, quaternäre Fettsäureominoester, z.B. Difettsäureisopropylesterdimethylammoniummethosulfat sowie quarternäre Fettsäureaminoamide, z.B. N-Undecylensäurepropylamido-N-trimethyl-ammoniummethsulfat. Ebenfalls geeignet sind amphotere Tenside, beispielsweise solche, die im gleichen Molekül mindestens ein quaternäres Ammoniumkation und mindestens ein Carboxylat- oder Sulfonatanion tragen. Handelsübliche Produkte dieser Art sind beispielsweise Dimethylcarboxymethyl-Fettsäurealkylamidoammoniumbetaine oder 3-(3-Fettsäureamido-propyl)dimethylammonium-2-hydroxypropansulfonate. Die ionischen Tenside können allein oder auch in Mischung miteinander verwendet werden sofern die Tensidmischung in Wasser nicht zur Ausfällung der Tenside führt.

Die Tenside werden In Mengen von 0,1 bis 10, vorzugsweise 0,5 bis 5 Gew.-%, bezogen auf die bei der Copolymerisation eingesetzten Monomeren, angewendet.

Wie oben bereits ausgeführt, erfolgt die Polymerisation in wäßriger Lösung. Da die Viskosität der Reaktionsmischung im Verlauf der Polymerisation stark ansteigt, benötigt man zur Polymerisation Mischapparaturen mit hohem Selbstreinigungsgrad. Der Selbstreinigungsgrad der in Betracht kommenden Mischvorrichtungen liegt oberhalb von 80 %. Unter Selbstreinigungsgrad wird das prozentuale Verhältnis des Anteils der abgereinigten Flächen zur Gesamtfläche der Mischelemente des Mischers verstanden. Geeignete Vorrichtungen, die einen hohen Selbstreinigungseffekt haben, sind beispielsweise in Chemie-Ingenieur-Technik, Band 57, 1005 (1985) beschrieben. Bei diesen Vorrichtungen handelt es sich vorzugsweise um Kneter oder geeignet konstruierte Extruder. Die Mischvorrichtungen können dabei eine oder mehrere Wellen aufweisen. Eine geeignete Vorrichtung mit hohem Selbstreinigungseffekt ist aus der zum Stand der Technik abgehandelten US-A-4 769 427 bekannt. Die Polymerisation kann sowohl kontinuierlich als auch

diskontinuierlich durchgeführt werden.

Gemäß Erfindung wird das Tensid dem Reaktionsgemisch, das polymerisiert wird, in spezieller weise zugeführt. Sofern man zur Modifizierung der wasserlöslichen Polymerisate ein wasserunlösliches Monomer der Gruppe (b) mitverwendet, gibt man bereits zu der wäßrigen Monomerlösung, die polymerisiert werden soll, bis zu 50 % der vorgesehenen Tensidmenge. Sofern ausschließlich wasserlösliche Monomere polymerisiert werden, führt man die Polymerisation vorzugsweise zunächst in Abwesenheit von Tensiden durch, bis der Umsatz bei der Polymerisation mindestens 60 und vorzugsweise mindestens 80 % beträgt. Wie bereits erwähnt, tritt mit fortschreitender Polymerisation eine starke Viskositätserhöhung des Reaktionsgemisches ein. Bei einer diskontinuierlich geführten Polymerisation ist dieses Phänomen beispielsweise daran erkenntlich, daß die Leistungsaufnahme des Rührwerks stark ansteigt. Sobald man das Tensid nach mindestens 60 %igem Monomerumsatz, vorzugsweise 80 %igem Monomerumsatz dem gebildeten Polymergel zusetzt, registriert man einen starken Abfall der Leistungsaufnahme des Rührwerks. Die Leistungsaufnahme geht dabei etwa auf einen Wert zurück, der vor Beginn der Polymerisation beim Rühren der beinahe wasserdünnen Polymerlösung gemessen wird. Der Zeitpunkt der Tensidzugabe, der einem hohen Monomerumsatz entspricht, kann auch mit Hilfe der Reaktionstemperatur ermittelt werden. Sobald nämlich die Reaktionstemperatur ihren maximalen Wert erreicht, dosiert man das Tensid. Bei einer kontinuierlich geführten Polymerisation steigt die Leistungsaufnahme des Rührwerks ohne Tensidzusatz mit fortschreitendem Monomerdurchsatz immer weiter an, bis schließlich eine Verstopfung des Reaktors und Stillstand des Rührers eintritt. Durch Zudosieren von Tensid hinter die Zone maximaler Temperatur wird jedoch eine rasche Zerkleinerung des Polymergels erreicht und die Leistungsaufnahme des Rührwerks auf konstantem Niveau gehalten.

Man kann ein Tensid oder eine Mischung mehrerer Tenside verwenden. Die Tenside können in einigen Fällen auch in unverdünntem Zustand, z.B. in flüssiger Form, als Schmelze oder als Pulver zu der polymerisierenden Reaktionsmischung zugegeben werden. Die Zugabe der Tenside kann auch in Form von wäßrigen Lösungen, z.B. mit Tensidkonzentration von 5 bis 50 Gew.-% erfolgen. Vorzugsweise werden die Tenside nach mindestens 60 %igem Monomerumsatz bzw. bei adiabatischer Polymerisation nach Erreichen der Spitzentemperatur dem polymerisierenden Gemisch innerhalb einer relativ kurzen Zeitspanne, beispielsweise innerhalb von einer Sekunde bis 5 Minuten, je nach Größe des Polymerisationsansatzes, zugegeben. Bei einer kontinuierlichen Polymerisation entsprechen die Zeitangaben der mittleren Verweilzeit des Reaktionsgemisches in dem Bereich, wo das Tensid zudosiert wird. Sobald die gesamte Tensidmenge zum zunächst zusammenhängenden Polymer zugefügt wird, zerfällt es unter den Polymerisationsbedingungen innerhalb weniger Sekunden in kleine, nichtklebende Teilchen. Dieser Zeitpunkt ist an einem starken Abfall der Leistungsaufnahme des Rührwerks erkennbar. Aufgrund der Tatsache, daß das Polymergel nach Zusatz der restlichen bzw. gesamten Tensidmenge in feine Teilchen zerfällt, die nicht miteinander agglomerieren und auch nicht an den Wandungen und den Rührwellen der Polymerisationsapparatur haften, wird das Polymerisat im weiteren Verlauf der Polymerisation und der weiteren Aufarbeitung nicht geschädigt.

Bei einer kontinuierlichen Polymerisation wird eine optimale Ausnutzung des Tensids vorzugsweise dadurch erreicht, daß das Tensid mit hoher Strömungsgeschwindigkeit direkt in den Knetspalt eingespritzt wird. Auf diese Weise wird die durch den Zerteilungsprozeß neu entstandene Oberfläche mit Tensid benetzt und ein Wiederverkleben verhindert.

Das Tensid wird vorteilhaft durch eine im Gegenhaken angebrachte Bohrung mit erhöhtem Druck von 1 000 bis $10.10^6$ Pa (0,01 bis 100 bar) in den maßgeblichen Knetspalt eingespritzt. Über die Länge des Reaktionsapparates gesehen sind mehrere dieser angebohrten Gegenhaken vorhanden, so daß eine Variabilität des Aufgabeortes - auch während des Betriebs - gewährleistet ist. Nicht in Gebrauch befindliche Zugabebohrungen werden zum Innenraum des Reaktionsapparates hin bündig abgeschlossen. Dies kann z.B. mittels einer Spindel erfolgen, welche mittels einer geeigneten Dichtung, z.B. Stopfbuchse, abzudichten ist.

Die Polymerisation kann bei Normaldruck, unter vermindertem Druck oder auch unter erhöhtem Druck ablaufen. Es kann in einigen Fällen von Vorteil sein, schon während des Polymerisierens Wasser aus dem System zu entfernen. Mit Hilfe einer Siedekühlung bei der Polymerisation ist es außerdem möglich, die Polymerisationstemperatur des Reaktionsgemisches zu kontrollieren bzw. konstant zu halten. Vorzugsweise wird die Reaktionsmischung während der Polymerisation nicht gekühlt, so daß die Temperatur beispielsweise von 40 °C bis auf 150 °C ansteigt. Nach dem Zusatz der restlichen bzw. gesamten Menge des Tensids zum Reaktionsgemisch wird die Polymerisation zu Ende geführt, d.h. die Monomeren sollen möglichst vollständig polymerisiert werden, z.B. zu 95 bis 99,9 %. In einigen Fällen lassen sich auch noch höhere Umsätze erzielen. Die so erhältlichen feinteiligen, wasserlöslichen Polymerisate haben im allgemeinen einen mittleren Durchmesser von 1 mm bis 50 mm, wobei auch in Abhängigkeit von der jeweils verwendeten Polymerisationsapparatur Teilchengrößen auftreten können, die außerhalb des angegebenen

Bereichs liegen. Diese Polymergele können gegebenenfalls mit Hilfe üblicher Zerkleinerungsvorrichtungen, wie beispielsweise Extruktoren, Granulatoren, Schneidmühlen, Zahnscheibemühlen zu Teilchen mit einer relativ einheitlichen Teilchengröße zerkleinert werden.

Die noch wasserhaltigen, feinteiligen Polymerisate können im Kneter getrocknet werden, so daß man feinteilige Polymerisate mit Wassergehalten von 0,1 bis 15 Gew.-% erhält. Falls gewünscht, können die wasserhaltigen, feinteiligen Polymerisate auch außerhalb der Polymerisationsapparatur in üblichen Trocknern, z.B. Bandtrocknern, Wirbelschichttrocknern oder Schaufeltrocknern entwässert werden. Die feintelllgen Polymerisate können auch nach dem Trocknungsschritt gegebenenfalls noch auf eine geringere Korngröße zerkleinert werden, z.B. durch Mahlen.

Nach dem erfindungsgemäßen Verfahren erhält man feinteilige, wasserlösliche Polymerisate mit K-Werten von mindestens 70, vorzugsweise 90 bis 300. Wasserlösliche Copolymere, insbesondere Copolymere von Acrylamid, werden als Verfestigungs- und Retentionsmittel für Papier und als Flockungs- und Sedimentationshilfsmittel im Bergbau und bei der Klärung kommunaler Abwässer eingesetzt. Wasserlösliche Copolymere, insbesondere Copolymere von Acrylsäure und Natriumacrylat finden beispielsweise Anwendung als Schlichtemittel für Textilfasern.

Die Prozentangaben in den Beispielen sind Gewichtsprozent. Die K-Werte der Polymerisate wurden nach H. Fikentscher, Cellulosechemie, Band 13, 58-64 und 71-74 (1932), bestimmt. Dabei bedeutet K = k x $10^3$. Die Messungen wurden in 5 %iger Kochsalzlösung bei einer Polymerkonzentration von 0,1 Gew.-% und einer Temperatur von 25 ° C und bei einem pH-Wert von 7 durchgeführt.

In den Beispielen wurden folgende Tenside verwendet:

Tensid 1: Dinatriumsalz von Rizinolsäuremonoethanolamidosulfosuccinat
Tensid 2: Ricinolsäurepropylamidotrimethylammoniummethosulfat
Tensid 3: EO/PO/EO-Blockpolymerisat (*) mit mittlerem Molekulargewicht 3000
Tensid 4: Ethoxyliertes PO-Additionsprodukt an Ethylendiamin mit mittlerem Molekulargewicht 12.200 (Ethoxylierungsgrad 70 %)

Allgemeine Vorschrift für die Polymerisation

Die in den Beispielen jeweils angegebenen wäßrigen Monomerlösungen werden in einen auf 60 ° C Wandtemperatur vorgeheizten einwelligen Kneter gefüllt. Sobald die Temperatur der Monomerlösung auf 40 ° C angestiegen ist, werden 25 ml einer 3 %igen wäßrigen Lösung von 2,2-Azobis-(amidinopropan)-dihydrochlorid zudosiert. Nach einer kurzen Induktionszeit beginnt die Temperatur des Reaktionsgemisches zu steigen und erreicht innerhalb kurzer Zeit ihren Maximalwert. Das dabei entstehende Polymergel beginnt in grobe Brocken zu zerfallen. Ca. 1 Minute nach Erreichen des Temperaturmaximums wird 1 %, bezogen auf die Monomermenge, eines in den Beispielen jeweils angegebenen Tensids zudosiert. Dadurch kommt es innerhalb weniger Sekunden zum Zerteilen des grob krümeligen Polymergels in kleine Partikeln. Gleichzeitig geht die während der Polymerisationsreaktion angestiegene Leistungsaufnahme des Rührwerks auf einen Wert zurück, der vor Beginn der Polymerisation beim Rühren der fast wasserdünnen Monomerlösung gemessen wurde. Nach ca. 5 minütiger Nachpolymerisationszeit wird das Polymergel aus dem Reaktor ausgetragen und im Vakuumtrockenschrank getrocknet. Die Polymerisation wurde in allen Fällen unter einer Stickstoffatmosphäre durchgeführt.

Beispiel 1

Man stellte eine wäßrige Monomerlösung her, indem man 250 g Wasser, 448 g 50 %ige wäßrige Acrylamidlösung, 120 g N,N-Dimethylaminoethylacrylat (neutralisiert mit der halben molaren Menge an 37,5 %iger wäßriger Schwefelsäure), 7,15 g einer 1 %igen wäßrigen Diethylentriaminpentanatriumacetatlösung und 8,0 g einer 10 %igen wäßrigen Lösung von Ameisensäure mischte. Nachdem die Temperatur mit 78 ° C ihren maximalen Wert erreicht hatte, fügte man innerhalb von 0,1 Minuten 1 Gew.-%, bezogen auf die Monomeren, des Tensids 1 zu. Man erhielt ein feinteiliges wasserlösliches Polymergel, das sich problemlos austragen ließ. Es hatte eine mittlere Teilchengröße von 2 bis 3 mm. Das Polymerisat hatte einen K-Wert von 201.

Anmerkung(*):
EO = Ethylenoxid
PO = Propylenoxid

Beispiele 2 bis 4

Beispiel 1 wurde mit den Ausnahmen wiederholt, daß die in Tabelle 1 angegebenen Tenside anstelle des Tensid 1 verwendet wurden. Der mittlere Teilchendurchmesser der dabei erhaltenen feinteiligen Polymerisate sowie der K-Wert sind in Tabelle 1 angegeben.

Tabelle 1

| Beispiel | eingesetztes Tensid | mittlere Teilchengröße der Polymerisate [mm] | K-Wert der Polymerisate |
|---|---|---|---|
| 2 | Tensid 2 | 2,5 | 207 |
| 3 | Tensid 3 | 4 | 203 |
| 4 | Tensid 4 | 4,5 | 199 |

Beispiel 5

Man bereitete eine wäßrige Monomerlösung durch Mischen von 452 g Acrylamid, 650 ppm Ameisensäure, 360 ppm Diethylentriaminpentanatriumacetat und 506 ml Wasser. Diese Monomerlösung wurde gemäß der oben gegebenen allgemeinen Verfahrensvorschrift bei einer Wandtemperatur des Kneters von 50 °C polymerisiert. Sobald die maximale Polymerisationstemperatur von 58 °C erreicht war, fügte man innerhalb von 0,2 Minuten 1 Gew.-%, bezogen auf das eingesetzte Monomere, des Tensids 1 zu. Die Polymerisation wurde von Beginn an unter einem Druck von 18 000 Pa (180 mbar) durchgeführt. Man erhielt ein gut rieselfähiges, feinteiliges Polymergel vom K-Wert 170. Die Teilchen hatten einen mittleren Durchmesser von 3 mm.

Beispiel 6

Die Monomerlösung besteht aus einer Mischung aus 225 g Wasser, 628 g 50 %iger wäßriger Acrylamidlösung, 165 g Acrylsäure, 188 g 50 %iger wäßriger Natronlauge und 0,3 g Diethylentriaminpentanatriumacetat. Die Monomerlösung enthielt außerdem noch zusätzlich, jeweils bezogen auf die Monomeren, 0,1 Mol-% Ameisensäure. Die Polymerisation erfolgte in dem in der allgemeinen Vorschrift angegebenen Kneter, jedoch bei einer Wandtemperatur von 50 °C. Als das Reaktionsgemisch eine maximale Temperatur von 77 °C erreicht hatte, setzte man, bezogen auf die verwendeten Monomeren 1 Gew.-% des Tensids 1 innerhalb von 0,1 Minuten zu. Das Polymergel zerteilte sich nach der Tensidzugabe zu einem feinteiligen Produkt, das an der Oberfläche noch schwach klebrig war. Das Polymerisat hatte einen K-Wert von 225. Die mittleren Teilchengröße des Polymerisats betrug 2,5 mm. Das Polymerisat konnte zu einem praktisch klebfreien feinteiligen Produkt getrocknet werden.

Beispiel 7

Man stellte eine wäßrige Monomerlösung her, indem man 345 g Wasser, 564 g einer 50 %igen wäßrigen Acrylamidlösung, 67,5 g Acrylsäure, 105 mg Diethylentriaminpentanatriumacetat, 45 mg Natriumhexametaphosphat, 450 mg Diethylentetramin und 69 g einer 50 %igen wäßrigen Natronlauge mischte. Durch Zugabe von 10 %iger wäßriger Ammoniaklösung wurde ein pH-Wert von 10 eingestellt. Die Polymerisation wurde in dem in der allgemeinen Herstellvorschrift beschriebenen einwelligen Kneter bei einer Wandtemperatur von 50 °C durchgeführt. Nachdem das Reaktionsgemisch eine maximale Temperatur von 79 °C erreicht hatte, fügte man 1 %, bezogen auf die eingesetzte Monomeren, des Tensids 3 zu. Das Polymergel zerteilte sich daraufhin in feine Teilchen mit einem mittleren Teilchendurchmesser von 2,5 mm. Man erhielt ein Polymerisat mit einem K-wert von 240.

Beispiel 8

Die Monomerlösung bestand aus einer Mischung von 340 g Acrylsäure, 114 g Natriumhydroxid, 40 mg Diethylentriaminpentanatriumacetat und 7,1 g Ameisensäure in 600 ml Wasser. Die Polymerisation wurde gemäß der oben gegebenen allgemeinen Herstellvorschrift mit der Ausnahme durchgeführt, daß man als Initiator 2,5 g Ammoniumperoxidisulfat in 90 ml Wasser einsetzte. Nachdem das Reaktionsgemisch eine

maximale Temperatur von 75° C erreicht hat, fügte man 1 %, bezogen auf Acrylsäure, des Tensids 1 innerhalb von 0,5 Minuten zu. Man erhielt ein gut rieselfähiges Polymerisat, das einen K-Wert von 103 hatte. Der mittlere Teilchendurchmesser des Polymerisats betrug 4 mm.

Beispiel 9

Man bereitet eine wäßrige Monomerlösung, die aus 22 kg Wasser, 51 kg 50 %iger wäßriger Acrylamidlösung, 12,5 kg Acrylsäure, 13,9 kg 50 %iger wäßriger Natronlauge und 7,8 g Diethylentriaminpentanatriumacetat besteht. Die Lösung enthält zusätzlich 0,15 Mol-% Ameisensäure.

Die Monomerlösung wird kontinuierlich im Verlauf von 8,5 h in einen 16 l fassenden, kontinuierlich arbeitenden einwelligen Kneter bei einem Reaktorinnendruck von 26 000 Pa (260 mbar) und einer Reaktortemperatur von 58° C zudosiert. Unmittelbar vor Eintritt der Monomerlösung in den Kneter wird in einer Mischkammer eine Initiatorlösung, die aus 52.3 g 2,2'-Azobis-(amidinopropan-)dihydrochlorid in 1000 g Wasser besteht, während der gesamten Zulaufzeit untergemischt.

Unmittelbar nach Eintritt in den Reaktor beginnt sich das Reaktionsgemisch zu erwärmen und erreicht nach kurzer Zelt die maximale Temperatur. Diese Polymerisationszone bleibt während der gesamten Zulaufzeit stationär an dieser Stelle.

Unmittelbar hinter dieser Zone wird eine Tensidlösung (bestehend aus 1500 g 30 %iger wäßriger Lösung des Tensids 1) kontinuierlich zudosiert. Es wird ein feintelliges, gut rieselfähiges Polymergel ausgetragen, das einen K-Wert von 248 besitzt.

Beispiel 10

Das gemäß Beispiel 9 erhaltene Polymergel enthält nach Austrag aus dem Kneter zu 95 % Gelteilchen mit einem Durchmesser kleiner 10 mm. Einzelne Körner können einen größeren Durchmesser aufweisen. Zur Verkürzung der Trocknungszeit und zur Vereinheitlichung des Trocknungsgrades ist es möglich, das Polymergel in einem Apparat, in dem Rotor und Stator mit Messern bestückt sind (Schneidmühle), auf ein einheitlicheres Kornspektrum zu zerkleinern. Die Zerkleinerung des Polymergels findet in dem engen Spalt statt, der beim Passieren zwischen Rotor und Stator vorhanden ist.

Die Zerkleinerung des oben beschriebenen Polymerisats wurde durchgeführt, indem man einen Teil des Polymerisats

a) durch den Zerkleinerungsapparat durchsetzte und

b) aus dem anderen Teil des Polymerisats zunächst den Grobanteil ausschleuste und nur diesen gesondert in der beschriebenen Vorrichtung auf eine Teilchengröße von 2 bis 3 mm zerkleinerte.

**Patentansprüche**

1. Verfahren zur Herstellung von feintelligen, wasserlöslichen Polymerisaten durch Polymerisieren von wasserlöslichen, monoethylenisch ungesättigten Monomeren in mindestens 20 gew.-%iger wäßriger Losung in Gegenwart von Radikale bildenden Initiatoren in einem Kneter unter Bildung feinteiliger, wasserlöslicher Polymergele, dadurch gekennzeichnet, daß man bei der Polymerisation 0,1 bis 10 Gew.-% an Tensiden, bezogen auf die gesamten Monomeren, einsetzt, wobei man zunächst bis zu einem Umsatz der Monomeren von mindestens 60 % in Abwesenheit von Tensiden oder in Gegenwart von bis zu 50 % der Tensidmenge polymerisiert und danach die restliche Tensidmenge zum Reaktionsgemisch zufügt und die Polymerisation zu Ende führt.

2. Verfahren nach Anspruch 1, dadurch gekennzeichnet, daß man die Monomeren zunächst in Abwesenheit von Tensiden bis zu einem Umsatz von mindestens 80 % polymerisiert und dann die gesamte Tensidmenge zusetzt.

3. Verfahren nach Anspruch 1 oder 2, dadurch gekennzeichnet, daß man Mischungen aus
   (a) wasserlöslichen, monoethylenisch ungesättigten Monomeren und
   (b) bis zu 20 Mol-%, bezogen auf die Monomeren (a), an wasserunlöslichen, monoethylenisch ungesättigten Monomeren

   polymerisiert.

## Claims

1. A process for the preparation of a finely divided, water-soluble polymer by polymerization of water-soluble, monoethylenically unsaturated monomers in not less than 20% strength by weight aqueous solution in the presence of a free radical initiator in a kneader with formation of a finely divided, water-soluble polymer gel, wherein from 0.1 to 10% by weight, based on the total monomers, of a surfactant are used in the polymerization, polymerization initially being carried out to a conversion of the monomers of not less than 60% in the absence of a surfactant or in the presence of not more than 50% of the amount of surfactant, and the remaining amount of surfactant then being added to the reaction mixture and the polymerization completed.

2. A process as claimed in claim 1, wherein the monomers are first polymerized in the absence of a surfactant to a conversion of not less than 80%, and the total amount of surfactant is then added.

3. A process as claimed in claim 1 or 2, wherein a mixture of
   a) water-soluble, monoethylenically unsaturated monomers and
   b) not more than 20 mol %, based on the monomers (a), of water-insoluble, monoethylenically unsaturated monomers

   is polymerized.

## Revendications

1. Procédé de fabrication de polymères finement divisés et solubles dans l'eau par la polymérisation de monomères monoéthyléniquement insaturés, solubles dans l'eau, en solution aqueuse à au moins 20% en poids, en présence d'amorceurs formateurs de radicaux, dans un malaxeur, sous formation de gels de polymères finement divisés, solubles dans l'eau, caractérisé en ce que l'on utilise, au cours de la polymérisation, 0,1 à 10% en poids d'agents tensioactifs par rapport aux monomères totaux, où l'on procède d'abord à la polymérisation jusqu'à une conversion des monomères d'au moins 60%, en l'absence d'agents tensioactifs, ou en présence de jusqu'à 50% de la proportion des agents tensioactifs et on ajoute ensuite la proportion résiduelle des agents tensioactifs au mélange réactionnel et on conduit la polymérisation jusqu'à son achèvement.

2. Procédé suivant la revendication 1, caractérisé en ce que l'on procède d'abord à la polymérisation des monomères en l'absence d'agents tensioactifs jusqu'à une conversion d'au moins 80% et on ajoute ensuite la proportion totale des agents tensioactifs.

3. Procédé suivant la revendication 1 ou 2, caractérisé en ce que l'on polymérise des mélanges
   (a) de monomères monoéthyléniquement insaturés et solubles dans l'eau et
   (b) de jusqu'à 20% molaires, par rapport aux monomères (a) de monomères monoéthyléniquement insaturés et insolubles dans l'eau.